# EUROPÄISCHE PATENTSCHRIFT

(11) **EP 3 719 595 B1**
(45) Veröffentlichungstag und Bekanntmachung des Hinweises auf die Patenterteilung: **10.07.2024**
(21) Anmeldenummer: 20166682.3
(22) Anmeldetag: 30.03.2020
(51) Int. Cl.: G05B 19/042, G05B 19/048, G06F 21/53

(54) **BEDIENUNG EINER TECHNISCHEN ANLAGE**
OPERATION OF A TECHNICAL SYSTEM
OPERATION D'UN SYSTÈME TECHNIQUE

(30) Priorität: 05.04.2019 DE 102019108975
(43) Veröffentlichungstag der Anmeldung: 07.10.2020
(73) Patentinhaber: Graf-Syteco GmbH & Co. KG, 78609 Tuningen (DE)
(72) Erfinder: ISELE, Rolf, 78609 Tuningen (DE)
(74) Vertreter: Klunker IP Patentanwälte PartG mbB

(56) Entgegenhaltungen:
- EP-A1- 3 418 825
- DE-A1- 102012 206 529
- DE-A1- 102017 108 316
- US-B1- 6 356 821

## Beschreibung

Die vorliegende Erfindung betrifft eine Vorrichtung zum Steuern oder Bedienen einer technischen Anlage, beispielsweise eines Fahrzeugs oder einer Maschine, und ferner ein Verfahren zum Steuern oder Bedienen einer technischen Anlage mittels einer solchen Vorrichtung.

Der Betrieb technischer Anlagen größerer Bauart, beispielsweise von Land- oder Baumaschinen, kommunalen Versorgungsfahrzeugen, wie zum Beispiel Müll- oder Feuerwehrfahrzeugen, oder dergleichen wird häufig mittels separater Steuer- oder Bediengeräte von einer Bedienperson gesteuert, indem spezielle Funktionen aktiviert und/ oder überwacht werden. Solche Funktionen sind beispielsweise das manuelle Starten eines Motors oder sonstiger Antriebseinheiten eines Fahrzeugs, das Schwenken eines Baukrans, oder auch das automatische Aktivieren von Sicherheitsfunktionen aufgrund vorgegebener Sicherheitskriterien, gefährliche Übertemperatur in der Hydraulikanlage, Ausschalten des Motors oder Anzeigen von Warnleuchten. Ebenso können Betriebszustände der Anlage über ein solches Steuer-/ Bediengerät überwacht werden.

Bediengeräte dieser Art sind mit geeigneter Benutzeroberfläche ausgestaltet, beispielsweise als Touchpad mit berührungsempfindlichen Tasten. Die Steuersoftware eines solchen Bediengeräts ist an die jeweilige, zu steuernde Anlage und deren Funktionen mittels einer externen Entwicklungsumgebung anpassbar.

Da solche Bediengeräte insbesondere auch sicherheitskritische Funktionen der Anlage überwachen und aktivieren und die Steuersoftware immer komplexer wird, ergibt sich bei der Entwicklung der Steuersoftware vielfach ein erhöhtes Risiko für Programmierfehler, die sicherheitskritische Funktionen der Anlage betreffen. Das Ändem einer Steuersoftware, zum Beispiel aufgrund von Kundenwünschen, kann Sicherheitsrisiken hervorrufen, weil komplexe softwaretechnische Wechselwirkungen unerkannt bleiben, die die Überwachung oder Aktivierung sicherheitskritischer Funktionen der Anlage betreffen. Ebenso ist die häufige Praxis problematisch, ein weiterentwickeltes Bediengerät mit einer Software eines älteren Bediengeräts zu betreiben, denn unvorhersehbare Wechselwirkungen zwischen neuer Hardware und alter Software sind dabei kaum auszuschließen.

EP 3 418 825 A1 offenbart eine Vorrichtung zum Steuern oder Bedienen einer Anlage, wobei das Bediengerät keine Aufteilung in einen ungesicherten Bereich mit einer erste Prozessoreinheit und in einen gesicherten Bereich mit einer zweiten Prozessoreinheit zeigt.

DE 10 2017108 316 A1 offenbart eine Vorrichtung zum Steuern oder Bedienen einer Anlage, wobei eine sicherheitsgerichtete Steuerungseinrichtung und eine nichtsicherheitsgerichtete Steuerungseinrichtung Teil der technischen Anlage und nicht der Vorrichtung zum Steuern oder Bedienen sind.

US 6 356 821 B1 offenbart eine Vorrichtung zum Steuern oder Bedienen einer Anlage in Form eines Fahrzeugs, wobei ein Bediengerät durch ein Lenkrad des Fahrzeuges extern zu der Vorrichtung realisiert ist. Weiterhin werden Sensordaten aufbereitet und keine Steuernachrichten.

Insofern ist es die Aufgabe der vorliegenden Erfindung, die vorgenannten Sicherheitsrisiken zu minimieren.

Gelöst wird diese Aufgabe durch eine Vorrichtung und ein Verfahren gemäß den unabhängigen Ansprüchen. Die davon abhängigen Ansprüche spezifizieren vorteilhafte Ausgestaltungen und Weiterbildungen der Erfindung.

Eine Vorrichtung zum Steuern oder Bedienen einer technischen Anlage umfasst ein eingangs beschriebenes Bediengerät sowie eine Steuerschnittstelle zu der Anlage, über die eine Bedienperson eine technische Anlage mit dem Bediengerät steuern kann. Dazu werden Steuernachrichten zwischen dem Bediengerät und der Anlage ausgetauscht, die auf Veranlassung der Bedienperson oder autonom von dem Bediengerät oder der Anlage erzeugt werden, und die mittelbar oder unmittelbar mit der Steuerung der Anlage im Zusammenhang stehen oder diese bewirken. Erfindungsgemäß umfasst die Vorrichtung ferner eine mit dem Bediengerät verbundene Sicherheitssteuerung, die solche Steuernachrichten, welche die Betriebssicherheit der Anlage betreffen und/ oder mittelbar oder unmittelbar dem Auslösen oder Überwachen einer sicherheitskritischen Funktion der Anlage dienen - im Weiteren als "sicherheitskritische Steuernachrichten" bezeichnet - durch Einfügen und/oder Extrahieren sicherheitskritischer Informationen in beziehungsweise aus den Steuernachrichten aufbereitet und/ oder auswertet, dass sie von dem Bediengerät und/ oder der Anlage umgesetzt werden können, wobei das Bediengerät einen ungesicherten Bereich umfasst, in dem eine erste Prozessoreinheit Steuernachrichten verarbeitet, deren sicherheitskritische Darstellungsinformationen eine Darstellung eines sicherheitskritischen, graphischen Elements auf einer graphischen Benutzerschnittstelle zur Steuerung der Anlage betreffen, und einen gesicherten Bereich umfasst, in dem eine zweite Prozessoreinheit einen bereitgestellten Referenzwert mit einem Vergleichswert vergleicht, wobei der Vergleichswert anhand der sicherheitskritischen Darstellungsinformationen ermittelt wird und wobei nur dann, wenn die beiden Werte im Betrieb des Bediengeräts kontinuierlich oder stichprobenartig übereinstimmen, der gesicherte Bereich die Darstellung des sicherheitskritischen, graphischen Elements akzeptiert. Mit anderen Worten, sicherheitskritische Steuernachrichten können erfindungsgemäß von dem Bediengerät und/ oder der Anlage erst umgesetzt werden, wenn die Sicherheitssteuerung die betreffende sicherheitskritische Steuernachricht bestimmter Anteile der Steuernachricht aufbereitet und/oder ausgewertet hat.

In diesem Zusammenhang ist unter dem Umsetzen einer sicherheitskritischen Steuernachricht zu verstehen, dass die betreffende Steuernachricht eine mittelbare oder unmittelbare Wirkung im Hinblick auf die Ausführung einer sicherheitskritischen Funktion der Anlage entfaltet, beispielsweise indem zum Aktivieren einer sicherheitskritischen Funktion der Bedienperson eine berührungsempfindliche Taste auf einer graphischen Benutzeroberfläche angeboten wird, indem die Betätigung einer solchen Taste überwacht, erkannt und interpretiert wird, indem eine von der Bedienperson aktivierte sicherheitskritische Funktion der Anlage ausgeführt wird oder indem Betriebszustände der Anlage und Sicherheitskriterien überwacht und Informationen erzeugt oder bewertet werden, die mit der sicherheitskritischen Funktion im Zusammenhang stehen.

Erfindungsgemäß betrifft das erfindungsgemäße Aufbereiten und/ oder Auswerten einer Steuernachricht insbesondere ein Einfügen von sicherheitskritischen Informationen in Steuernachrichten und/ oder ein Extrahieren und Weiterverarbeiten von sicherheitskritischen Informationen aus Steuernachrichten. Als sicherheitskritische Informationen werden hierbei diejenigen Anteile einer sicherheitskritischen Steuernachricht bezeichnet, die ursächlich sind für die oben beschriebene Wirkung, welche sich bei der Umsetzung einer sicherheitskritischen Steuernachricht entfaltet. Insofern sind sicherheitskritische Informationen zum Beispiel veränderliche, situationsabhängige Parameter oder Datensätze, die beim Anzeigen von berührungsempfindlichen Tasten auf einer graphischen Benutzeroberfläche, beim Betätigen einer solchen Taste oder beim Ausführen einer sicherheitskritischen Funktion benötigt und/ oder erzeugt werden. Solche Parameter oder Datensätze betreffen insbesondere Betriebszustände und Sicherheitskriterien der Anlage und/oder des Bediengeräts im Zusammenhang mit sicherheitskritischen Funktionen.

Auf diese Weise werden sicherheitskritische Funktionen der Anlage, also solche Funktionen, die Risiken beinhalten und Gefahrensituationen zur Folge haben können, nicht mehr von einer komplexen Steuer- oder Betriebssoftware eines Bediengeräts autonom angesteuert, sondern sie werden der Kontrolle der Sicherheitssteuerung unterworfen, indem diese die zur Umsetzung einer sicherheitskritischen Steuernachricht benötigten sicherheitskritischen Informationen bereitstellt oder überwacht.

Das erfindungsgemäße Prinzip besteht also darin, dass auf der informationstechnischen Ebene sicherheitskritische Steuernachrichten mit sicherheitskritischen Informationen identifiziert werden und dies auf der technisch-apparativen Ebene dadurch berücksichtigt wird, dass das Bediengerät lediglich die sicherheitsunkritischen Aspekte der Steuerung der Anlage bearbeitet und die Sicherheitssteuerung demgegenüber die sicherheitskritischen Aspekte der Steuerung beziehungsweise die sicherheitskritischen Informationen der Steuernachrichten bearbeitet. Sicherheitskritische Informationen können in diesem Zusammenhang beispielsweise Betriebsmodi, Betriebszustände oder Betriebsparameter der Anlage sein und/ oder die Interaktion mit einer Bedienperson im Hinblick auf die Aktivierung einer sicherheitskritischen Funktion betreffen.

Diese logische und technische Trennung zwischen sicherheitsunkritischen und sicherheitskritischen Aspekten der Steuerung der Anlage vermindert die Komplexität der Steuersoftware des Bediengeräts und mögliche Risiken von Programmierfehlern erheblich.

Bei einer besonders bevorzugten Ausführungsform der Erfindung wird diese Trennung dadurch verwirklicht, dass derjenige Anteil der Steuersoftware des Bediengeräts, der sicherheitskritische Steuernachrichten bearbeitet, die der Aufbereitung und/ oder Auswertung durch die Sicherheitssteuerung bedürfen, fest im Bediengerät implementiert ist, während die Sicherheitssteuerung die variablen, sicherheitskritischen Informationen bereitstellt und/ oder auswertet. Über eine Entwicklungsumgebung anpassbar oder umprogrammierbar sind dann also lediglich solche Anteile der Steuersoftware, die sicherheitsunkritische Steuernachrichten bearbeiten. Diese Ausführungsform sieht insbesondere vor, dass sicherheitskritische Informationen Parameter einer sicherheitskritischen Steuernachricht sind, welche von der Sicherheitssteuerung parametrisiert wird.

Vorzugsweise wird die Steuersoftware des Bediengeräts mittels einer externen Entwicklungsumgebung programmiert, administriert und bei sich ändernden Anforderungen umprogrammiert oder erweitert. In dieser Weise wird insbesondere eine graphische Benutzerumgebung oder Benutzerschnittstelle (GUI), die auf einem Display des Bediengeräts angezeigt wird, mit einer externen Entwicklungsumgebung für Visualisierungsanwendungen entwickelt. Eine Bedienperson kann die Anlage später über die graphische Benutzerschnittstelle und deren graphische Elemente oder Objekte, nachfolgend als Tasten bezeichnet, steuern und bedienen. Auch sicherheitskritische Funktionen der Anlage können mit Hilfe von graphischen Elementen oder Objekten über die graphische Benutzerschnittstelle aktiviert werden. Solche graphischen Elemente werden als sicherheitskritische, graphische Elemente bezeichnet.

Vorzugsweise können die sicherheitskritischen Funktionen der Anlage nicht über die auf das Bediengerät zugreifende Entwicklungsumgebung programmiert oder adaptiert werden. Die betreffenden sicherheitskritischen Steuernachrichten, die diese sicherheitskritischen Funktionen mittelbar oder unmittelbar auslösen, können deshalb auch nicht über die Entwicklungsumgebung parametrisiert, aufbereitet und/ oder ausgewertet werden. Dadurch sind sicherheitskritische Funktionen der Anlage nicht mehr potentiell Gegenstand menschlicher oder systematischer Fehler. Vielmehr werden diese sicherheitskritischen Steuernachrichten erfindungsgemäß ausschließlich über die Sicherheitssteuerung und eine geeignete Schnittstelle zum Bediengerät parametrisiert, aufbereitet und/oder ausgewertet, so dass das Bediengerät im Hinblick auf die Ansteuerung sicherheitskritischer Funktionen durch sicherheitskritische Steuernachrichten nur sicherheitskritische Informationen nutzt, die von der Sicherheitssteuerung bereitgestellt, ausgewertet, überwacht oder freigegeben werden.

Sicherheitskritische Steuernachrichten betreffen die Betriebssicherheit der Anlage. Ihre Umsetzung durch das Bediengerät oder die Anlage führt zu einem inhärenten Risiko für einen Personen- oder Sachschaden, beispielsweise weil die Anlage in Betrieb gesetzt wird. Die sicherheitskritischen Informationen, die solche Steuernachrichten auszeichnen, werden von der Sicherheitssteuerung bereitgestellt und in die Steuernachricht eingefügt, gegebenenfalls nach Überprüfung von Sicherheitskriterien und/oder Betriebszuständen der Anlage. Andererseits werden sicherheitskritische Informationen, die einen Betriebszustand oder Sicherheitsstatus der Anlage betreffen, von der Sicherheitssteuerung aus den betreffenden sicherheitskritischen Steuernachrichten extrahiert, beispielsweise zur Überwachung von Betriebsmodi oder Prüfung von Sicherheitskriterien.

Sicherheitskritische Informationen werden erfindungsgemäß nicht vom Bediengerät hinsichtlich einer Ausführung einer sicherheitskritischen Funktion ausgewertet. Solche Auswertungen können demzufolge nicht mittels einer externen Entwicklungsumgebung im Rahmen der Programmierung oder Revision der Steuersoftware des Bediengeräts implementiert oder manipuliert werden. Gemäß dem erfindungsgemäß verwirklichten Sicherheitskonzept werden sicherheitskritische Steuernachrichten, welche sicherheitskritische Funktionen der Anlage betreffen, immer im Wege der Aufbereitung oder Auswertung durch die Sicherheitssteuerung kontrolliert oder freigeben.

Dies bietet den Vorteil, dass die Programmierung oder Änderung von sicherheitsunkritischen Aspekten der Steuersoftware des Bediengeräts, wie zum Beispiel des grundlegenden Designs der graphischen Benutzerschnittstelle, keinerlei Auswirkung auf die Umsetzung von sicherheitskritischen Steuernachrichten und deren Aufbereitung mit sicherheitskritischen Informationen hat, da dies für eine Entwicklungsumgebung des Bediengeräts unzugänglich in der Sicherheitssteuerung implementiert ist. Dies hat ferner zur Folge, dass bei Revisionen oder Änderungen von sicherheitskritischen Aspekten im Zusammenhang mit sicherheitskritischen Funktionen der Anlage lediglich die Sicherheitssteuerung geeignet angepasst und wieder abgenommen werden muss, während das eigentliche Bediengerät unverändert bleiben kann. Entwicklungszeiten und Fehlerquellen reduzieren sich dadurch drastisch.

Die Sicherheitssteuerung überwacht vorzugsweise die Umsetzung von sicherheitskritischen Steuernachrichten zum Zweck des Auslösens von sicherheitskritischen Funktionen der Anlage, indem sie die aus Steuernachrichten extrahierten sicherheitskritischen Informationen mit vorgegebenen Sicherheitskriterien vergleicht. So kann die Sicherheitssteuerung aus sicherheitskritischen Steuernachrichten, welche Rückmeldungen der Anlage und/ oder Interaktionen des Bedieners mit dem Bediengerät betreffen, wichtige Informationen über die Betriebszustände und die Betriebssicherheit der Anlage gewinnen, diese auswerten und andere sicherheitskritische Steuernachrichten davon abhängig aufbereiten.

Erfindungsgemäß umfasst das Bediengerät einen ungesicherten Bereich, der von einer ersten Prozessoreinheit mit Speicher und sonstiger Infrastruktur gebildet wird, sowie einen gesicherten Bereich, der von einer zweiten Prozessoreinheit mit Speicher und entsprechender Infrastruktur gebildet wird. Der gesicherte Bereich wird auch als Sicherheitskern (Security Kernel) bezeichnet. Er ist separiert und abgesichert gegenüber den sonstigen Bereichen des Bediengeräts. Vorzugsweise ist nur der ungesicherte Bereich und dessen Anteil der Steuersoftware über die Entwicklungsumgebung zugänglich und abänderbar, während der gesicherte Bereich und dessen Anteil der Steuersoftware fest implementiert und über die Entwicklungsumgebung unzugänglich ist.

Die erfindungsgemäße Aufbereitung und/oder Auswertung von sicherheitskritischen Steuernachrichten umfasst eine Interaktion der Sicherheitssteuerung mit dem ungesicherten oder dem gesicherten Bereich. Vorzugsweise umfasst die Interaktion der Sicherheitssteuerung mit dem ungesicherten Bereich insbesondere das Parametrisieren von Steuernachrichten, die die graphische Benutzeroberfläche betreffen, mit sicherheitskritischer Darstellungsinformation betreffend Position, Größe und/oder Beschriftung von sicherheitskritischen Tasten, mit welchen eine Bedienperson sicherheitskritische Funktionen der Anlage aktivieren kann. Vorzugsweise umfasst die Interaktion der Sicherheitssteuerung mit dem gesicherten Bereich insbesondere das Überwachen von Steuernachrichten, die die Aktivierung von sicherheitskritischen Funktionen durch die Bedienperson betreffen, indem sicherheitskritische Überwachungsinformationen dieser Steuernachrichten geprüft oder verifiziert werden, sowie das Erzeugen und Prüfen von Steuernachrichten, die konkrete sicherheitskritische Funktionen der Anlage auslösen.

Der ungesicherte Bereich wird betrieben durch ein herkömmliches Linux-Betriebssystem oder zum Beispiel ein Betriebssystem gemäß der Norm EC 61131, welches die erste Prozessoreinheit und die weitere Infrastruktur betreibt. Diese erste Prozessoreinheit verarbeitet insbesondere die sicherheitsunkritischen und vorzugsweise nicht unmittelbar sicherheitskritischen Steuernachrichten, welche Darstellungsinformationen hinsichtlich Design, Aufbau und Anordnung der graphischen Benutzerschnittstelle und entsprechender Tasten betreffen. Dieser Bereich ist über eine externe Entwicklungsumgebung veränderbar.

Soweit mit einem graphischen Element, einer Taste, der graphischen Benutzerschnittstelle eine sicherheitskritische Funktion ausgelöst werden kann, wird die betreffende Darstellungsinformation als sicherheitskritische Darstellungsinformation eingestuft, die vorzugsweise von der Sicherheitssteuerung bereitgestellt wird und die über den gesicherten Bereich des Bediengeräts überwacht wird. Ein solches sicherheitskritisches, graphisches Element ist zum Beispiel ein graphisches Element zum Start eines Motors der Anlage, dessen Position innerhalb der graphischen Benutzerschnittstelle und dessen Größe und Design bestimmten Sicherheitsvorgaben entsprechen muss, damit dessen Sicherheitsrelevanz für eine Bedienperson deutlich erkennbar ist. Solche Vorgaben muss ein Programmierer der graphischen Benutzerschnittstelle berücksichtigen, damit die Sicherheitssteuerung und/oder der gesicherte Bereich des Bediengeräts das entsprechende graphische Element bei der Überprüfung der Sicherheitsvorgaben im laufenden Betrieb akzeptiert.

Diese Sicherheitsvorgaben sind der Sicherheitssteuerung bekannt oder werden ihr bereitgestellt, beispielsweise in Form eines Referenzwertes, der von der Sicherheitssteuerung an den gesicherten Bereich des Bediengeräts übergeben wird und dort mit der vom ungesicherten Bereich erzeugten Taste auf der graphischen Benutzerschnittstelle bzw. der zugehörigen Darstellungsinformation verglichen wird. Nur wenn die beiden Werte im Betrieb des Bediengeräts kontinuierlich oder stichprobenartig übereinstimmen, akzeptiert der gesicherte Bereich die Ausgestaltung der betreffenden Taste durch den ungesicherten Bereich.

Im gesicherten Bereich wiederum werden durch die zweite Prozessoreinheit solche Steuernachrichten verarbeitet, deren sicherheitskritische Informationen Überwachungsinformationen sind, die eine Betätigung einer Taste durch die Bedienperson betreffen, um eine sicherheitskritische Funktion der Anlage auszulösen. Hierbei überprüft die Sicherheitssteuerung, ob die aus einer Steuernachricht extrahierten Überwachungsinformationen vorgegebenen Sicherheitskriterien für das Auslösen der betreffenden sicherheitskritischen Funktion entspricht. Vorzugsweise sind diese Sicherheitskriterien in Form von Referenzinformationen vorgegeben und die extrahierten Überwachungsinformationen werden zur Prüfung mit diesen Referenzinformationen verglichen.

Vorzugsweise bildet das erfindungsgemäße Bediengerät ein Mehrprozessorsystem mit zumindest der ersten Prozessoreinheit für den ungesicherten Bereich und der zweiten Prozessoreinheit für den gesicherten Bereich. Zumindest der gesicherte Bereich mit der zweiten Prozessoreinheit ist hinsichtlich Arbeitsspeicher, Privilegien und Infrastruktur sicherheitstechnisch geschützt gegenüber Eingriffen und bildet einen Sicherheitskern des Bediengeräts. Ein solches Mehrprozessorsystem im Rahmen der vorliegenden Erfindung kann beispielsweise ein i.MX8-Mehrkernprozessor sein, wobei der ungesicherte Bereich vorzugsweise einen Cortex-A35-Prozessor umfasst, der durch ein Linux-Betriebssystem betrieben wird, während der gesicherte Bereich eine Prozessoreinheit umfasst, die von einem M4-Prozessor und / oder einem weiterem Cortex-A35-Prozessor und / oder einem externen Controller gebildet wird. Die Schnittstellen zwischen der Sicherheitssteuerung und den beiden Bereichen des Bediengeräts können vorzugsweise als CAN- oder CAN-Safety-Busse ausgebildet sein.

Weitere Merkmale und Vorteile der Erfindung ergeben sich aus der folgenden Beschreibung erfindungsgemäßer Ausführungsbeispiele sowie weiteren Ausführungsalternativen im Zusammenhang mit den folgenden Zeichnungen, die zeigen:
- Figur 1: eine schematische Ansicht eine bevorzugten Ausführungsform der erfindungsgemäßen Vorrichtung mit Bediengerät und Sicherheitssteuerung;
- Figur 2: eine graphische Benutzerschnittstelle des Bediengeräts mit einer sicherheitskritischen Taste; und
- Figur 3: eine bevorzugte Ausführungsform des erfindungsgemäßen Verfahrens illustriert anhand der Vorrichtung gemäß Fig. 1.

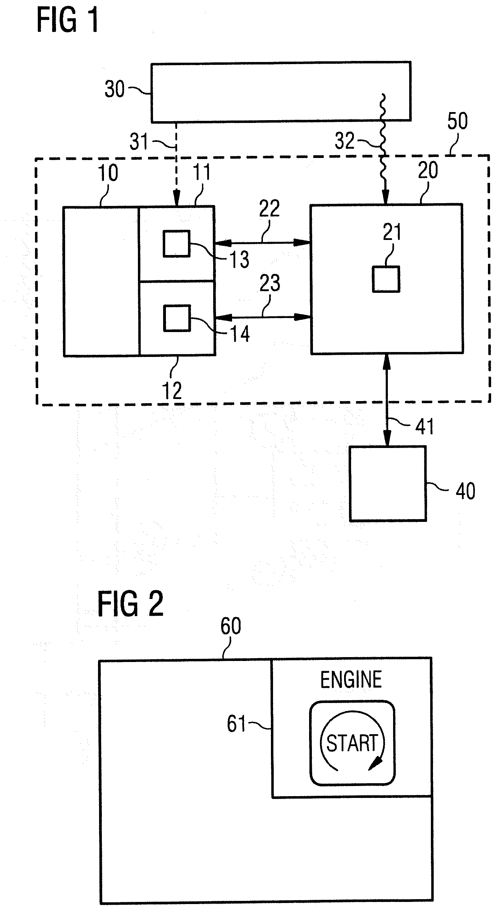

Figur 1 zeigt eine bevorzugte Ausführungsform der erfindungsgemäßen Vorrichtung 50 umfassend einerseits ein Bediengerät 10 und andererseits eine über zwei Schnittstellen 22, 23 mit dem Bediengerät 10 verbundene Sicherheitssteuerung 20. Das Bediengerät 10 umfasst ein Mehrprozessorsystem mit zumindest zwei Prozessoreinheiten 13, 14 für Aufgaben unterschiedlicher Sicherheitsstufen. Die Sicherheitssteuerung 20 ist vorzugsweise als vergleichbares Mehrprozessorsystem ausgebildet, kann aber auch als herkömmliches Monoprozessorsystem üblicher Bauart aufgebaut sein.

Die Vorrichtung 50 steht über geeignete Ein- und Ausgänge mit einer technischen Anlage 40 in einer Datenkommunikationsverbindung, über welche das Bediengerät 10 den Betrieb der Anlage 40 und deren Funktionen steuern kann. Bei der bevorzugten Ausführungsform gemäß Fig. 1 wird die Anlage 40 über die Ein- und Ausgänge einer Steuerschnittstelle 41 zwischen der Sicherheitssteuerung 20 und der Anlage 40 gesteuert. Das Bediengerät 10 steuert die Anlage 40 also mittelbar über die Sicherheitssteuerung 20, welche die Anlage 40 unmittelbar über die Steuerschnittstelle 41 ansteuert.

Die Anlage 40 ist in der Regel eine technische Großanlage, deren Betrieb mit diversen Sicherheitsrisiken einhergeht, und für die besondere Sicherheitsanforderungen gelten. Derartige Anlagen 40 können Baumaschinen und mobile Arbeitsmaschinen sein, wie zum Beispiel Bagger oder Baukräne, Kommunal- oder Feuerwehrfahrzeuge, landwirtschaftliche Fahrzeuge, zum Beispiel Erntemaschinen oder Mal- /Mischanlagen, bis hin zu maritimen Großanlagen, wie sie auf Ölplattformen zu finden sind. Prinzipiell kann die Anlage 40 eine Maschine nach der EU-Richtlinie 2006/42/EG (Maschinenrichtlinie) sein.

Die Betriebs- oder Steuersoftware des Bediengeräts 10 ist über eine Schnittstelle 31 zugänglich für eine externe Entwicklungsumgebung 30. Die Entwicklungsumgebung 30 umfasst vorzugsweise eine Visualisierungskomponente, mit der die graphische Benutzerschnittstelle des Bediengeräts 10 an Bedürfnisse einer Bedienperson und/ oder die technischen Gegebenheiten der Anlage 40 angepasst werden kann. Darüber hinaus umfasst die Entwicklungsumgebung 30 vorzugsweise auch Komponenten zur Applikationsprogrammierung, mit der die Betriebs- oder Steuersoftware des Bediengeräts 10 geändert werden kann. Im einfachsten Fall handelt es sich bei der Schnittstelle 31 um eine herkömmliche USB-Verbindung, über die die Entwicklungsumgebung 30 gemäß geeigneter Protokolle mit dem Bediengerät 10 im Verbindung steht.

Das Mehrprozessor-Bediengerät 10 umfasst zumindest einen ungesicherten Bereich 11, vorzugsweise ausgestaltet als separater Prozessorkern mit der Prozessoreinheit 13 und entsprechender Infrastruktur, beispielsweise betrieben unter dem Betriebssystem Linux. Der gesicherte Bereich 12 ist ausgestaltet als separater Sicherheitskern mit der Prozessoreinheit 14 und geeignet gesichert gegenüber Manipulation und unbefugtem Zugriff, zum Beispiel über die Entwicklungsumgebung 30. Der Anteil der Steuersoftware des Bediengeräts 10, der in dem gesicherten Bereich 12 liegt, ist insofern fest implementiert und unveränderbar.

Die Prozessoreinheit 14 gemäß Fig. 1 entspricht der Sicherheitsnorm EN ISO 13849 und umfasst als solche selbst zumindest zwei Prozessoren, nämlich vorzugsweise einen M4-Prozessor, einem weiterem Cortex-A35-Prozessor, sowie gegebenenfalls einen externen Controller. Die Prozessoreinheit 13 gemäß Fig. 1 ist demgegenüber als Monoprozessor ausgebildet, kann aber im Bedarfsfall ebenfalls zumindest zwei Einzelprozessoren umfassen.

Die Sicherheitssteuerung 20 umfasst auch eine Schnittstelle 32 zum Datenaustausch mit der Entwicklungsumgebung 30. Diese Schnittstelle dient lediglich dazu, sicherheitskritische Darstellungs- und/ oder Überwachungsinformationen an die Sicherheitssteuerung 20 weiterzugeben, die zur Überwachung der Umsetzung sicherheitskritischer Steuernachrichten durch das Bediengerät 10 und/oder die Anlage 10 über die beiden Schnittstellen 22, 23 benötigt wird. Die Schnittstelle 32 bedarf keiner besonderen Ausgestaltung, im einfachsten Fall wird sie durch zwei herkömmliche USB-Anschlüsse gebildet, zwischen denen sicherheitskritische Dateninformationen manuell per USB-Stick ausgetauscht werden. Möglich ist aber auch temporär eine kabelgebundene Verbindung zwischen der Entwicklungsumgebung 30 und der Sicherheitssteuerung 20, beispielsweise während einer Entwicklungs- oder Wartungsphase der Vorrichtung 50.

Die beiden Schnittstellen 22 und 23 sind bei mobilen Arbeitsmaschinen ausgestaltet als CAN-Busse, wobei die Schnittstelle 23 zu dem gesicherten Bereich 12 des Bediengeräts 10 besonderen Sicherheitsanforderungen genügt und als solches ein CAN-Sicherheitsbus ("CAN safety bus") ist, beispielsweise betrieben gemäß dem CAN-Open-Safety-Protokoll. Alternativ kann auch eine Datenkommunikation per ESX-CAN-Efficiency Safety-Protokoll oder gemäß einem anderen geeigneten Protokoll vorgesehen sein.

Die Architektur der Vorrichtung 50 mit ihrer funktionellen und apparativen Unterteilung in das Bediengerät 10 einerseits und die Sicherheitssteuerung 20 andererseits stellt sicher, dass sämtliche sicherheitskritischen Steuernachrichten, die das Bediengerät 10 mit der Anlage 40 austauscht, die mittelbar oder unmittelbar mit einer sicherheitskritischen Funktion der Anlage 40 im Zusammenhang stehen, oder die in Interaktion mit einer Bedienperson über eine graphische Benutzerschnittstelle betreffend eine sicherheitskritische Funktion der Anlage 40 bearbeitet werden, von der Sicherheitssteuerung 20 und deren Prozessor 21 bereitgestellt, verifiziert oder überwacht werden.

Das besondere Sicherheitskonzept der Vorrichtung 50 besteht darin, dass diejenigen Anteile der Steuersoftware des Bediengeräts 10, die mittelbar oder unmittelbar sicherheitskritische Funktionen der Anlage 40 betreffen, fest programmiert und unveränderlich im gesicherten Bereich 12 liegen, und gleichzeitig variable, sicherheitskritische Informationen, die das Bediengerät 10 bearbeitet, von der Sicherheitssteuerung 20 bereitgestellt, geprüft, freigegeben und/ oder überwacht werden.

Insofern werden sicherheitskritische Steuernachrichten, die die Darstellung von solchen graphischen Elementen oder Tasten auf der graphischen Benutzerschnittstelle betreffen, deren Betätigung sicherheitskritische Funktionen auslösen, zwar im ungesicherten Bereich 11 des Bediengeräts 10 ausgeführt, die benötigte sicherheitskritische Darstellungsinformationen zur konkreten Darstellung solcher Tasten aber von der Sicherheitssteuerung 20 bereitgestellt. Solche sicherheitskritische Steuernachrichten, bei deren Umsetzung mittelbar oder unmittelbar sicherheitskritische Funktionen der Anlage 40 ausgeführt werden, werden jedoch im gesicherten Bereich 12 des Bediengeräts 10 bearbeitet, während die Sicherheitssteuerung 20 diese Umsetzung überwacht. In beiden Fällen stellt die Sicherheitssteuerung 20 dem Bediengerät entweder die veränderlichen, sicherheitskritischen Steuerinformationen zur Verfügung, beispielsweise Steuerparameter oder dergleichen, oder prüft solche Steuerinformationen, wenn sie vom Bediengerät 10 oder der Anlage 40 stammen.

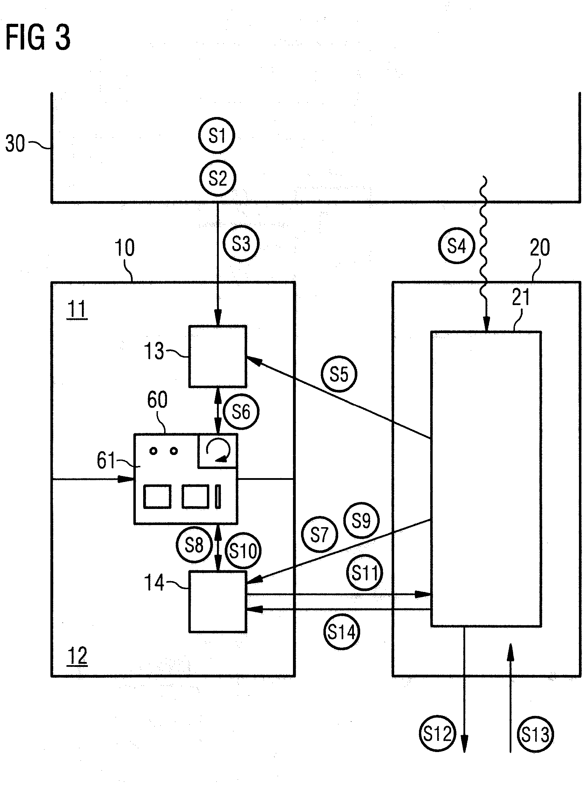

Figur 2 illustriert die graphische Benutzerschnittstelle 60 des Bediengeräts 10 und ein ausgewähltes, von der Bedienperson betätigbares graphisches Element, nämlich eine Motor-Start-Taste 61. Die gleiche Benutzeroberfläche 60 ist in Figur 3 noch einmal einerseits den ungeschützten Bereich 11 mit der Prozessoreinheit 13 und andererseits den gesicherten Bereich 12 mit der Prozessoreinheit 14 überlappend dargestellt, um zu veranschaulichen, dass von beiden Bereichen 11,13 aus auf die Benutzerschnittstelle 60 zugegriffen werden kann.

Die Figur 3 illustriert eine besondere Ausführungsform des erfindungsgemäßen Verfahrens. Sie veranschaulicht den Fluss von Steuernachrichten und Steuerinformationen zwischen den in Figur 1 dargestellten Komponenten, nämlich dem Bediengerät 10, der Sicherheitssteuerung 20 und der Entwicklungsumgebung 30. Die Schritte S1 bis S6 dienen der Darstellung eines graphischen Elements, zum Beispiel der Motor-Start-Taste 61 aus Figur 2 als Icon auf der Benutzeroberfläche 60, die Schritte S7 und S8 dienen der Überwachung der korrekten Darstellung der Motor-Start-Taste 61 und anhand der Schritte S9 bis S13 wird schließlich die Betätigung des Motor-Start-Knopfs 61 durch die Bedienperson beschrieben.

Zunächst wird die graphische Benutzeroberfläche 60 mittels der graphischen Entwicklungsumgebung 30 hinsichtlich ihrer sicherheitsunkritischen Anteile entwickelt. Solche Tasten 61, die sicherheitskritische Funktionen der Anlage 40 betreffen, müssen bestimmte Sicherheitsvorgaben erfüllen. Zum Beispiel müssen sie ausreichend groß und rechteckig sowie eindeutig beschriftet sein, damit eine Bedienperson die mit dem Betätigen dieser Taste verbundenen Sicherheitsaspekte richtig einschätzt.

Die Motor-Start-Taste 61 ist ein solches berührungsempfindliches Element ("Touch-Key" oder "Softkey"), mit dem eine potentiell gefahrbringende Funktion der Anlage 40 ausgelöst werden kann, nämlich der Start des Motors. Sie wird in Schritt S1 definiert und als sicherheitskritische Taste markiert. In Schritt S2 bestimmt die Entwicklungsumgebung 30 dann die sich an den Sicherheitsvorgaben orientierenden sicherheitskritischen Informationen, die mit einer Darstellung des Motor-Start-Knopfes 61 auf der Benutzeroberfläche 60 verbunden sind. Dabei wird für die Motor-Start-Taste 61 zum Beispiel festgelegt, an welcher Position der Benutzeroberfläche 61 (z.B. rechts oben bei Position 1180, 0) und in welcher Mindestgröße sie darzustellen ist (z.B. 100 x 100 Pixel). Zudem wird ein Referenzwert errechnet, zum Beispiel eine Prüf- oder Checksumme, in die die Sicherheitsvorgaben der Taste 61 eingehen, um im späteren Betrieb deren korrekte Darstellung zu prüfen. In Schritt S3 überträgt die Entwicklungsumgebung 30 zumindest eine Steuernachricht an den ungesicherten Bereich 11 des Bediengeräts 10, mit den sicherheitsunkritischen Darstellungsinformationen für die graphische Benutzeroberfläche 61. Die sicherheitskritischen Darstellungsinformationen werden nicht auf direktem Wege von der Entwicklungsumgebung 30 an das Bediengerät 10 übertragen.

In Schritt S4 werden die sicherheitskritischen Darstellungsinformationen der Motor-Start-Taste 61, nämlich zumindest deren Größe, Position und Beschriftung, zusammen mit dem Referenzwert an die Sicherheitssteuerung 20 und deren Prozessor 21 übertragen oder übergeben. Dieser wiederum ergänzt die in Schritt S3 an das Bediengerät 10 übertragene Steuernachricht in Schritt S5 um die Darstellungsinformationen für die Darstellung der Motor-Start-Taste 61. Schließlich wird in Schritt S6 die graphische Benutzeroberfläche einschließlich der sicherheitskritischen Motor-Start-Taste 61 vollständig dargestellt.

Als nächstes wird die Überwachung der Darstellung der Motor-Start-Taste 61 im laufenden Betrieb erläutert. Dazu bedarf es einer Datenkommunikation zwischen der Sicherheitssteuerung 20 und dem gesicherten Bereich 12 und dessen Prozessoreinheit 14 über die CAM-Safety-Schnittstelle 23. Die Sicherheitssteuerung 20 überträgt dazu in Schritt S7 zumindest eine Steuernachricht mit sicherheitskritischen Überwachungsinformationen in Form zumindest eines Referenzwertes an den gesicherten Bereich 12 des Bediengeräts 10, welcher die Vorgaben zur Darstellung von Tasten in einer technisch geeigneten Form repräsentiert, welche im Zusammenhang mit sicherheitskritischen Funktionen der Anlage 40 stehen. Dieser Referenzwert kann entweder aus Sicherheitsvorgaben erzeugt werden, die der Sicherheitssteuerung 20 bekannt sind, oder es handelt sich um den in Schritt S4 empfangenen Referenzwert.

In Schritt S8 liest die Prozessoreinheit 14 dann einen Vergleichswert aus dem Grafikspeicher des Bediengeräts 10 aus, der die konkrete Darstellung der Taste 61 auf der Benutzerschnittstelle 60 betrifft, zum Beispiel deren Position, Größe und Beschriftung, oder der Vergleichswert wird direkt anhand der konkreten Darstellung der Taste 61 oder den in Schritt S6 übertragenen sicherheitskritischen Darstellungsinformationen ermittelt. Dieser Vergleichswert wird im gesicherten Bereich 12 permanent mit dem in Schritt S7 übertragenen Referenzwert verglichen, um kontinuierlich festzustellen, ob die Motor-Start-Taste 61 den Sicherheitsvorgaben entspricht und an der vorgegebenen Position und in der vorgegebenen Größe auf der graphischen Benutzeroberfläche 60 dargestellt ist.

Schließlich wird auch die Betätigung der Motor-Start-Taste 61 von der Sicherheitssteuerung 20 überwacht, für die es mehrere Betätigungsmodi geben kann, zum Beispiel das Starten des Motors als sicherheitskritische Funktion durch eine reine Tastfunktion, oder das Starten des Motors als Aktivier-/Haltefunktion, oder das Ausschalten des Motors und Beendens der sicherheitskritischen Funktion. Diese und gegebenenfalls weitere Betätigungsmodi der Taste 61 werden von der Sicherheitssteuerung 20 kontinuierlich überwacht.

Im vorliegenden Fall soll der Motor gestartet werden, wenn die Taste 61 zehn Sekunden lang ununterbrochen gedrückt wird. Danach kann die Motor-Start-Taste 61 losgelassen werden und der Motor läuft ohne weitere Betätigung der Taste 61 weiter. Während der zehn Sekunden langen Betätigungsphase wird ein Sicherheitscheck durchgeführt, um sicherzustellen, dass der Motor wie vorgesehen gestartet werden kann. So wird beispielsweise geprüft, ob sich Hydraulikschläuche gelöst haben, in welchem Fall der Motorstart unabhängig von einer Betätigung der Taste 61 sofort abgebrochen wird.

Für diese Überwachung der Aktivierung einer sicherheitskritischen Funktion der Anlage durch Betätigung der Taste 61 schickt die Sicherheitssteuerung 20 in Schritt S9 zunächst zumindest eine sicherheitskritische Steuernachricht mit sicherheitskritischen Überwachungsinformationen in Form des aktuellen Betriebsmodus der Taste 61 an den gesicherten Bereich 12 und dessen Prozessoreinheit 14. Im vorliegenden Fall betrifft das die Aktivier-/Haltefunktion der Motor-Start-Taste 61. Die Prozessoreinheit 14 überwacht im Schritt S10 kontinuierlich die Betätigungen der Taste 61 und schickt in Schritt S11 solange sicherheitskritische Steuernachrichten an die Sicherheitssteuerung 20, wie eine Bedienperson die Taste 61 betätigt.

Sobald die Sicherheitssteuerung 20 feststellt, dass die Sicherheitskriterien erfüllt sind weil sie vorgegebenen Referenzinformationen entsprechen, wonach die Taste 61 also beispielsweise zehn Sekunden ununterbrochen betätigt werden soll, ohne dass der parallel ablaufende Sicherheitscheck technische Problem zurückmeldet, wird in Schritt S12 eine Steuernachricht zum Starten des Motors über die Steuerschnittstelle 41 an die Anlage 40 gesendet oder über einen Ausgang eines Motorstartrelais aktiviert. In Schritt S13 werden Steuernachrichten mit sicherheitskritischen Informationen hinsichtlich des Motorbetriebs von der Anlage 40 über die Schnittstelle 41 an die Sicherheitssteuerung 20 zurückgeliefert, so dass die Sicherheitssteuerung den weiteren Verlauf des Motorbetriebs überwachen und steuern kann. Hierbei werden die Steuernachrichten gemäß der Schritte S7, S9, S11, S14 über die gesicherte Schnittstelle 23 und diejenigen gemäß der Schritte S12, S13 über die Steuerschnittstelle 41 ausgetauscht.

## Patentansprüche

1. Vorrichtung (50) zum Steuern oder Bedienen einer technischen Anlage (40), insbesondere eines Fahrzeugs, umfassend ein Bediengerät (10), welches Steuernachrichten mit der Anlage (40) austauscht, wobei die Vorrichtung (50) eine mit dem Bediengerät (10) verbundene Sicherheitssteuerung (20) umfasst, welche eingerichtet ist, Steuernachrichten, welche die Betriebssicherheit der Anlage (40) betreffen, durch Einfügen und/oder Extrahieren sicherheitskritischer Informationen in beziehungsweise aus den Steuernachrichten aufzubereiten und/ oder auszuwerten, dass sie von dem Bediengerät (10) und/oder der Anlage (40) als sicherheitskritische Steuernachrichten umgesetzt werden können,
**dadurch gekennzeichnet,**
**dass** das Bediengerät (10) einen ungesicherten Bereich (11) umfasst, in dem eine erste Prozessoreinheit (13) Steuernachrichten verarbeitet, deren sicherheitskritische Darstellungsinformationen eine Darstellung eines sicherheitskritischen, graphischen Elements (61) auf einer graphischen Benutzerschnittstelle (60) zur Steuerung der Anlage (40) betreffen, und einen gesicherten Bereich (12) umfasst, in dem eine zweite Prozessoreinheit (14) einen bereitgestellten Referenzwert mit einem Vergleichswert vergleicht, wobei der Vergleichswert anhand der sicherheitskritischen Darstellungsinformationen ermittelt wird und wobei nur dann, wenn die beiden Werte im Betrieb des Bediengeräts (10) kontinuierlich oder stichprobenartig übereinstimmen, der gesicherte Bereich (12) die Darstellung des sicherheitskritischen, graphischen Elements (61) akzeptiert.

2. Vorrichtung (50) nach Anspruch 1, **dadurch gekennzeichnet, dass** die Sicherheitssteuerung (20) eingerichtet ist, bei der Aufbereitung und/oder Auswertung der Steuernachrichten sicherheitskritische Informationen in eine Steuernachricht einzufügen, durch deren Umsetzung die Anlage (40) derart angesteuert wird oder einem Bediener der Anlage (40) eine derartige Bedienung der Anlage (40) ermöglicht wird, dass eine sicherheitskritische Funktion der Anlage (40) ausgeführt wird, und/ oder sicherheitskritische Informationen aus der Steuernachricht zu extrahieren, die einen Betriebszustand der Anlage (40) charakterisiert.

3. Vorrichtung (50) nach einem der Ansprüche 1 bis 2, **dadurch gekennzeichnet, dass** solche Steuernachrichten, die zur Umsetzung der Aufbereitung und/oder Auswertung durch die Sicherheitssteuerung (20) bedürfen, im Bediengerät (10) fest implementiert sind, wobei die Sicherheitssteuerung (20) eingerichtet ist, diese Steuernachrichten bei der Aufbereitung und/oder Auswertung mittels sicherheitskritischer Informationen zu parametrisieren.

4. Vorrichtung (50) nach einem der Ansprüche 1 bis 3, **dadurch gekennzeichnet, dass** die Sicherheitssteuerung (20) eingerichtet ist, die Umsetzung von sicherheitskritischen Steuernachrichten nach vorgegebenen Sicherheitskriterien zu überwachen, insbesondere dadurch, dass Rückmeldungen der Anlage (40) und/oder einem Bediener der Anlage mit vorgegebenen Kriterien verglichen werden.

5. Vorrichtung (50) nach einem der Ansprüche 1 bis 4, **dadurch gekennzeichnet, dass** das Bediengerät (10) eine Programmierschnittstelle (31) umfasst, über die Darstellungsinformationen zur Darstellung von sicherheitskritischen, graphischen Elementen (61) auf der graphischen Benutzerschnittstelle (60) eingespielt werden können, wobei die Sicherheitssteuerung (20) eingerichtet ist, solche Darstellungsinformationen um sicherheitskritische Darstellungsinformationen zur Darstellung von sicherheitskritischen, graphischen Elementen (61) zu ergänzen und/oder sicherheitskritische Darstellungsinformationen, die über die Programmierschnittstelle (31) eingespielt werden, anhand vorgegebener Kriterien zu überwachen.

6. Vorrichtung (50) nach einem der Ansprüche 1 bis 5, **dadurch gekennzeichnet, dass** das Bediengerät (10) eingerichtet ist, dass die zweite Prozessoreinheit (14) Steuernachrichten verarbeitet, deren sicherheitskritische Überwachungsinformation eine Betätigung eines sicherheitskritischen, graphischen Elements (61) durch einen Bediener zum Auslösen einer Funktion der Anlage (40) betreffen, wobei die Sicherheitssteuerung (20) eingerichtet ist, die Überwachungsinformation mit einer vorgegebenen Referenzinformation zu vergleichen und bei Übereinstimmung eine sicherheitskritische Steuernachricht zur Umsetzung der durch den Bediener ausgelösten Funktion der Anlage (40) an die zweite Prozessoreinheit (14) zu senden.

7. Vorrichtung (50) nach einem der Ansprüche 1 bis 6, **dadurch gekennzeichnet, dass** der ungesicherte Bereich (11) eine erste, gesicherte Schnittstelle (23) umfasst, über die die Sicherheitssteuerung (20) der ersten Prozessoreinheit (13) sicherheitskritische Informationen, insbesondere sicherheitskritische Darstellungsinformationen, bereitstellen kann, und der gesicherte Bereich (12) eine zweite, gesicherte Schnittstelle (23) umfasst, über die die Sicherheitssteuerung (20) der zweiten Prozessoreinheit (14) sicherheitskritische Informationen, insbesondere sicherheitskritische Überwachungsinformationen bereitstellen kann, wobei die beiden Schnittstellen (22, 23) vorzugsweise CAN-Schnittstellen sind; und/ oder
dass das Bediengerät (10) ein Mehrprozessorsystem ist, vorzugsweise ein iMX8-Mehrprozessorsystem, wobei die erste Prozessoreinheit (13) einen Cortex-A35-Prozessor umfasst und die zweite Prozessoreinheit (14) einen Cortex-M4-Prozessor und einem Cortex-A35-Prozessor umfasst.

8. Verfahren zum Steuern oder Bedienen einer technischen Anlage (40), insbesondere eines Fahrzeugs, mittels Steuernachrichten, welche ein Bediengerät (10) mit der Anlage (40) austauscht (S11/S12, S13/S14), wobei eine mit dem Bediengerät (10) verbundene Sicherheitssteuerung (20) Steuernachrichten, welche die Betriebssicherheit der Anlage (40) betreffen, durch Einfügen und/ oder Extrahieren sicherheitskritischer Informationen in beziehungsweise aus den Steuernachrichten aufbereitet und/oder auswertet (S4, S5, S7, S9, S11, S14), dass sie von dem Bediengerät und/ oder der Anlage als sicherheitskritische Steuernachrichten umgesetzt werden können (S6, S8, S10, S12),
**dadurch gekennzeichnet,**
**dass** das Bediengerät (10) in einem ungesicherten Bereich (11) mit einer ersten Prozessoreinheit (13) Steuernachrichten verarbeitet, deren sicherheitskritische Darstellungsinformationen eine Darstellung eines sicherheitskritischen, graphischen Elements (61) auf einer graphischen Benutzerschnittstelle (60) zur Steuerung der Anlage (40) betreffen, und in einem gesicherten Bereich (12) mit einer zweiten Prozessoreinheit (14) einen bereitgestellten Referenzwert mit einem Vergleichswert vergleicht, wobei der Vergleichswert anhand der sicherheitskritischen Darstellungsinformationen ermittelt wird und wobei nur dann, wenn die beiden Werte im Betrieb des Bediengeräts (10) kontinuierlich oder stichprobenartig übereinstimmen, der gesicherte Bereich (12) die Darstellung des sicherheitskritischen, graphischen Elements (61) akzeptiert.

9. Verfahren nach Anspruch 8, **dadurch gekennzeichnet, dass** die Sicherheitssteuerung (20) die Steuernachrichten aufbereitet und/oder auswertet (S4, S5, S7, S9, S11, S14), indem sicherheitskritische Informationen in die Steuernachrichten eingefügt (S5, S7) und/ oder aus den Steuernachrichten extrahiert werden (S9), vorzugsweise indem sicherheitskritische Informationen in eine Steuernachricht eingefügt werden (S5, S7, S9), bei deren Umsetzung (S6, S8, S10, S12) die Anlage (40) derart angesteuert wird oder einem Bediener der Anlage (40) eine derartige Bedienung der Anlage (40) ermöglicht wird, dass eine sicherheitskritische Funktion der Anlage (40) ausgeführt wird, und/oder sicherheitskritische Informationen aus einer Steuernachricht extrahiert werden (S4, S11, S13), die einen Betriebszustand der Anlage (40) charakterisieren.

10. Verfahren nach Anspruch 8 oder 9, **dadurch gekennzeichnet, dass** die Sicherheitssteuerung (20) die Umsetzung von sicherheitskritischen Steuernachrichten nach vorgegebenen Sicherheitskriterien überwacht (S5, S7, S9), insbesondere dadurch, dass Rückmeldungen (S11, S13) der Anlage (40) und/oder eines Bedieners der Anlage (40) mit vorgegebenen Kriterien verglichen werden (S11).

11. Verfahren nach einem der Ansprüche 8 bis 11, **dadurch gekennzeichnet, dass** solche Steuernachrichten, die zum Umsetzen (S6, S8, S10, S12) durch die Sicherheitssteuerung (20) aufbereitet und/ oder ausgewertet werden müssen, im Bediengerät fest implementiert sind, wobei die Sicherheitssteuerung diese Steuernachrichten bei der Aufbereitung und/ oder Auswertung mittels sicherheitskritischer Informationen parametrisiert (S5, S7, S9; 14).

12. Verfahren nach einem der Ansprüche 8 bis 11, **dadurch gekennzeichnet, dass** die zweite Prozessoreinheit (14) Steuernachrichten verarbeitet (S8), deren sicherheitskritische Überwachungsinformation eine Betätigung eines sicherheitskritischen, graphischen Elements (61) durch einen Bediener zum Veranlassen (S12) einer Funktion der Anlage (40) betreffen, wobei die Sicherheitssteuerung (20) die Überwachungsinformation mit einer vorgegebenen Referenzinformation vergleicht (S11) und bei Übereinstimmung eine sicherheitskritische Steuernachricht zur Umsetzung der durch den Bediener veranlassten Funktion der Anlage (40) an die zweite Prozessoreinheit (14) sendet.

## Claims

1. An apparatus (50) for controlling or operating a technical system (40), in particular a vehicle, comprising an operating device (10) which exchanges control messages with the system (40), wherein the apparatus (50) comprises a safety controller (20) connected to the operating device (10), said safety controller being adapted to reprocess and/or evaluate control messages concerning the operational safety of the system (40) by inserting and/or extracting safety-critical information items in and/or from the control messages, so that these can be implemented by the operating device (10) and/or the system (40) as safety-critical control messages, **characterized in that**
the operating device (10) comprises an unsecured area (11), in which a first processor unit (13) processes control messages the safety-critical display information items of which concern a display of a safety-critical, graphic element (61) on a graphic user interface (60) for controlling the system (40), and comprises a secured area (12), in which a second processor unit (14) compares a supplied reference value to a comparative value, wherein the comparative value is ascertained on the basis of the safety-critical display information items, and wherein the secured area (12) will accept the display of the safety-critical, graphic element (61) only if the two values conform with each other continuously or upon random checking during operation of the operating device (10).

2. The apparatus (50) according to claim 1, **characterized in that** the safety controller (20) is adapted, when reprocessing and/or evaluating the control messages, to insert safety-critical information items in a control message, by the implementation of which the system (40) is driven such that or such an operation of the system (40) is made possible for an operator of the system (40) that
a safety-critical function of the system (40) is executed and/or to extract safety-critical information items from the control message that characterizes an operation state of the system (40).

3. The apparatus (50) according to either of claims 1 to 2, **characterized in that** such control messages that require reprocessing and/or evaluation by the safety controller (20) for implementation are firmly implemented in the operating device (10), wherein the safety controller (20) is adapted to parametrize these control messages during reprocessing and/or evaluation by means of safety-critical information items.

4. The apparatus (50) according to any of claims 1 to 3, **characterized in that** the safety controller (20) is adapted to monitor the implementation of safety-critical control messages in accordance with predetermined safety criteria, in particular by comparing feedbacks of the system (40) and/or an operator of the system with predetermined criteria.

5. The apparatus (50) according to any of claims 1 to 4, **characterized in that** the operating device (10) comprises a programming interface (31), via which display information items for displaying safety-critical, graphic elements (61) can be loaded onto the graphic user interface (60), wherein the safety controller (20) is adapted to complement such display information items by safety-critical display information items for displaying safety-critical, graphic elements (61) and/or adapted to monitor safety-critical display information items that are loaded via the programming interface (31) on the basis of predetermined criteria.

6. The apparatus (50) according to any of claims 1 to 5, **characterized in that** the operating device (10) is adapted such that the second processor unit (14) processes control messages the safety-critical monitoring information of which concern an operation of a safety-critical, graphic element (61) by an operator in order to trigger a function of the system (40), wherein the safety controller (20) is adapted to compare the monitoring information with predetermined reference information and, in the case of conformity, to send a safety-critical control message for implementation of the function of the system (40) triggered by the operator to the second processor unit (14).

7. The apparatus (50) according to any of claims 1 to 6, **characterized in that** the unsecured area (11) comprises a first, secured interface (23) via which the safety controller (20) of the first processor unit (13) can supply safety-critical information items, in particular safety-critical display information items, and the secured area (12) comprises a second, secured interface (23) via which the safety controller (20) of the second processor unit (14) can supply safety-critical information items, in particular safety-critical monitoring information items, wherein the two interfaces (22, 23) are preferably CAN interfaces; and/or
that the operating device (10) is a multiple processor system, preferably an iMX8 multiple processor system, wherein the first processor unit (13) comprises a Cortex-A35 processor and the second processor unit (14) comprises a Cortex-M4 processor and a Cortex-A35 processor.

8. A method for controlling or operating a technical system (40), in particular a vehicle, by means of control messages which are exchanged (S11/S12, S13/S 14) by an operating device (10) with the system (40), wherein a safety controller (20) connected to the operating device (10) reprocesses and/or evaluates (S4, S5, S7, S9, S11, S14) control messages that concern the operational safety of the system (40) by inserting and/or extracting safety-critical information items in and/or from the control messages, so that these can be implemented (S6, S8, S10, S12) by the operating device and/or the system as safety-critical control messages, **characterized in that**
in an unsecured area (11) with a first processor unit (13), the operating device (10) processes control messages the safety-critical display information items of which concern a display of a safety-critical, graphic element (61) on a graphic user interface (60) for controlling the system (40), and, in a secured area (12) with a second processor unit (14), compares a supplied reference value with a comparative value, wherein the comparative value is ascertained on the basis of the safety-critical display information items, and wherein the secured area (12) will accept the display of the safety-critical, graphic element (61) only if the two values conform continuously or upon random checking during operation of the operating device (10).

9. The method according to claim 8, **characterized in that** the safety controller (20) reprocesses and/or evaluates (S4, S5, S7, S9, S11, S14) the control messages by safety-critical information items being inserted (S5, S7) in the control messages and/or extracted (S9) from the control messages, preferably by safety-critical information items being inserted (S5, S7, S9) in a control message, upon the implementation (S6, S8, S10, S12) of which the system (40) is driven such that or such an operation of the system (40) is made possible for an operator of the system (40) that a safety-critical function of the system (40) is executed, and/or safety-critical information items are extracted (S4, S11, S13) from a control message which characterize an operating state of the system (40).

10. The method according to claim 8 or 9, **characterized in that** the safety controller (20) monitors (S5, S7, S9) the implementation of safety-critical control messages in accordance with predetermined safety criteria, in particular by comparing (S11) feedbacks (S11, S13) of the system (40) and/or of an operator of the system (40) with predetermined criteria.

11. The method according to any of claims 8 to 11, **characterized in that** such control messages which require reprocessing and/or evaluation by the safety controller (20) for implementation (S6, S8, S10, S12), are firmly implemented in the operating device, wherein the safety controller parametrizes (S5, S7, S9; 14) these control messages during reprocessing and/or evaluation by means of safety-critical information items.

12. The method according to any of claims 8 to 11, **characterized in that** the second processor unit (14) processes (S8) control messages the safety-critical monitoring information items of which concern an operation of a safety-critical, graphic element (61) by an operator for prompting (S12) a function of the system (40), wherein the safety controller (20) compares (S11) the monitoring information with predetermined reference information and, in the case of conformity, sends a safety-critical control message for implementation of the function of the system (40) prompted by the operator to the second processor unit (14).

## Revendications

1. Dispositif (50) de commande et de manoeuvre d'une installation technique (40), en particulier d'un véhicule, comprenant un appareil de manoeuvre (10) qui échange avec l'installation (40) des messages de commande, cependant que le dispositif (50) comprend une commande de sécurité (20) reliée à l'appareil de manoeuvre (10) et équipée pour, par insertion et/ou extraction d'informations critiques pour la sécurité dans ou à partir des messages de commande, conditionner et/ou évaluer de telle façon des messages de commande concernant la sécurité de fonctionnement de l'installation (40) qu'ils puissent être mis en oeuvre par l'appareil de manoeuvre (10) et/ou par l'installation (40) en tant que messages de commande critiques pour la sécurité,
**caractérisé en ce**
**que** l'appareil de manoeuvre (10) comprend une zone non sécurisée (11) dans laquelle une première unité de processeur (13) traite des messages de commande dont les informations de représentation critiques pour la sécurité concernent une représentation d'un élément graphique (61) critique pour la sécurité sur une interface graphique d'utilisateur (60) pour la commande de l'installation (40), et comprend une zone sécurisée (12) dans laquelle une seconde unité de processeur (14) compare une valeur de référence mise à disposition avec une valeur de comparaison, cependant que la valeur de comparaison est déterminée à l'aide des informations de représentation critiques pour la sécurité, et
cependant que, uniquement dans la cas où les deux valeurs concordent, continuellement ou lors de vérifications aléatoires, lors du fonctionnement de l'appareil de manoeuvre (10), la zone sécurisée (12) accepte la représentation de l'élément graphique (61) critique pour la sécurité.

2. Dispositif (50) selon la revendication 1, **caractérisé en ce que** la commande de sécurité (20) est conçue pour, lors du conditionnement et/ou de l'évaluation des messages de commande, insérer des informations critiques pour la sécurité dans un message de commande par la mise en oeuvre duquel l'installation (40) peut être pilotée de telle façon ou un tel pilotage de l'installation (40) peut être rendu possible à un opérateur de l'installation (40) qu'une fonction, critique pour la sécurité, de l'installation (40), est exécutée, et/ou pour extraire du message de commande des informations critiques pour la sécurité caractérisant un état de fonctionnement de l'installation (40) .

3. Dispositif (50) selon une des revendications de 1 à 2, **caractérisé en ce que** de tels messages de commande qui, pour leur mise en oeuvre, ont besoin d'être conditionnés et/ou évalués par la commande de sécurité (20), sont implémentés à demeure dans l'appareil de manoeuvre (10), cependant que la commande de sécurité (20) est conçue pour paramétrer ces messages de commande au moyen d'informations critiques pour la sécurité lors du conditionnement et/ou de l'évaluation.

4. Dispositif (50) selon une des revendications de 1 à 3, **caractérisé en ce que** la commande de sécurité (20) est conçue pour surveiller selon des critères de sécurité prédéterminés la mise en oeuvre de messages de commande critiques pour la sécurité, en particulier en comparant les réponses de l'installation (40) et/ou d'un opérateur de l'installation avec des critères prédéterminés.

5. Dispositif (50) selon une des revendications de 1 à 4, **caractérisé en ce que** l'appareil de manoeuvre (10) comprend une interface de programmation (31) par l'intermédiaire de laquelle des informations de représentation pour la représentation d'éléments graphiques (61) critiques pour la sécurité peuvent être introduits sur l'interface graphique de l'utilisateur (60), cependant que la commande de sécurité (20) est conçue pour compléter de telles informations de représentation par des informations de représentation critiques pour la sécurité pour la représentation d'éléments graphiques (61) critiques pour la sécurité, et/ou pour surveiller au moyen de critères prédéterminés des informations de représentation critiques pour la sécurité qui sont introduites par l'intermédiaire de l'interface de programmation (31).

6. Dispositif (50) selon une des revendications de 1 à 5, **caractérisé en ce que** l'appareil de manoeuvre (10) est conçu pour que la seconde unité de processeur (14) traite des messages de commande dont les informations de surveillance critiques pour la sécurité concernent un actionnement d'un élément graphique (61) critique pour la sécurité par un opérateur pour déclencher une fonction de l'installation (40), cependant que la commande de sécurité (20) est conçue pour comparer l'information de surveillance avec une information de référence prédéterminée et, en cas de concordance, pour envoyer à la seconde unité de processeur (14) un message de commande critique pour la sécurité pour la mise en oeuvre de la fonction de l'installation (40) déclenchée par l'opérateur.

7. Dispositif (50) selon une des revendications de 1 à 6, **caractérisé en ce que** la zone non sécurisée (11) comprend une première interface (23) , sécurisée, par l'intermédiaire de laquelle la commande de sécurité (20) peut mettre à la disposition de la première unité de processeur (13) des informations critiques pour la sécurité, en particulier des informations de représentation critiques pour la sécurité, et la zone sécurisée (12) comprend une seconde interface (23), sécurisée, par l'intermédiaire de laquelle la commande de sécurité (20) peut mettre à la disposition de la seconde unité de processeur (14) des informations critiques pour la sécurité, en particulier des informations de surveillance critiques pour la sécurité, cependant que les deux interfaces (22, 23) sont de préférence des interfaces CAN ; et/ou
**que** l'appareil de manoeuvre (10) est un système multiprocesseur, de préférence un système multiprocesseur iMX8, cependant que la première unité de processeur (13) comprend un processeur Cortex-A-35 et la seconde unité de processeur (14) comprend un processeur Cortex-M4 et un processeur Cortex-A35.

8. Procédé de commande et de manoeuvre d'une installation technique (40), en particulier d'un véhicule, au moyen de messages de commande qu'un appareil de manoeuvre (10) échange (S11 / S12 / S13 / S14) avec l'installation (40), cependant qu'une commande de sécurité (20) reliée à l'appareil de manoeuvre (10) conditionne et/ou évalue (S4, S5, S7, S9, S11, S14), par insertion et/ou extraction d'informations critiques pour la sécurité dans ou à partir des messages de commande, de telle façon des messages de commande concernant la sécurité de fonctionnement de l'installation (40) qu'ils peuvent être mis en oeuvre (S6, S8, S10, S12) par l'appareil de manoeuvre et/ou par l'installation en tant que messages de commande critiques pour la sécurité,
**caractérisé en ce**
**que** l'appareil de manoeuvre (10) traite avec une première unité de processeur (13) dans une zone non sécurisée (11) des messages de commande dont les informations de représentation critiques pour la sécurité concernent une représentation d'un élément graphique (61) critique pour la sécurité sur une interface graphique d'utilisateur (60) pour la commande de l'installation (40), et compare avec une seconde unité de processeur (14) dans une zone sécurisée (12) une valeur de référence mise à disposition avec une valeur de comparaison, cependant que la valeur de comparaison est déterminée à l'aide des informations de représentation critiques pour la sécurité, et
cependant que, uniquement dans la cas où les deux valeurs concordent, continuellement ou lors de vérifications aléatoires, lors du fonctionnement de l'appareil de manoeuvre (10), la zone sécurisée (12) accepte la représentation de l'élément graphique (61) critique pour la sécurité.

9. Procédé selon la revendication 8, **caractérisé en ce que** la commande de sécurité (20) conditionne et/ou évalue (S4, S5, S7, S9, S11, S14) les messages de commande, ce qui a lieu **en ce que** des informations critiques pour la sécurité sont insérées (S5, S7) dans les messages de commande et/ou extraites (S9) à partir des messages de commande, de préférence **en ce que** des informations critiques pour la sécurité sont insérées (S5, S7, S9) dans un message de commande lors de la mise en oeuvre (S6, S8, S10, S12) duquel l'installation (40) est pilotée de telle façon ou un tel pilotage de l'installation (40) peut être rendu possible à un opérateur de l'installation (40) qu'une fonction, critique pour la sécurité, de l'installation (40), est exécutée, et/ou des informations critiques pour la sécurité, caractérisant un état de fonctionnement de l'installation (40), sont extraites (S4, S11, S13) d'un message de commande.

10. Procédé selon la revendication 8 ou 9, **caractérisé en ce que** la commande de sécurité (20)
surveille (S5, S7, S9) selon des critères de sécurité prédéterminés la mise en oeuvre de messages de commande critiques pour la sécurité, en particulier **en ce que** des réponses (S 11, S13) de l'installation (40) et/ou d'un opérateur de l'installation sont comparées (S11) avec des critères prédéterminés.

11. Procédé selon une des revendications de 8 à 11, **caractérisé en ce que** de tels messages de commande qui, pour leur mise en oeuvre (S6, S8, S10, S12), doivent être conditionnés et/ou évalués par la commande de sécurité (20), sont implémentés à demeure dans l'appareil de manoeuvre, cependant que la commande de sécurité paramètre (S5, S7, S9; S14) ces messages de commande au moyen d'informations critiques pour la sécurité lors du conditionnement et/ou de l'évaluation.

12. Procédé selon une des revendications de 8 à 11, **caractérisé en ce que** la seconde unité de processeur (14) traite (S8) des messages de commande dont les informations de surveillance critiques pour la sécurité concernent un actionnement d'un élément graphique (61) critique pour la sécurité par un opérateur pour déclencher (S12) une fonction de l'installation (40), cependant que la commande de sécurité (20) compare (S11) l'information de surveillance avec une information de référence prédéterminée et, en cas de concordance, envoie à la seconde unité de processeur (14) un message de commande critique pour la sécurité pour la mise en oeuvre de la fonction de l'installation (40) déclenchée par l'opérateur.
